# EUROPEAN PATENT SPECIFICATION

(11) **EP 3 432 549 B1**
(45) Date of publication and mention of the grant of the patent: **23.12.2020**
(21) Application number: 17765698.0
(22) Date of filing: 25.02.2017
(51) Int. Cl.: H04L 29/08, G06F 9/50, G06F 9/455

(54) **METHOD AND APPARATUS FOR PROCESSING USER REQUESTS**
VERFAHREN UND VORRICHTUNG ZUR VERARBEITUNG VON BENUTZERANFRAGEN
PROCÉDÉ ET APPAREIL DE TRAITEMENT DE DEMANDES D'UTILISATEUR

(30) Priority: 14.03.2016 CN 201610144243
(43) Date of publication of application: 23.01.2019
(73) Proprietor: Alibaba Group Holding Limited, Grand Cayman (KY)
(72) Inventor: LIU, Zhongwei, Hangzhou Zhejiang 311121 (CN); YAN, Changhai, Hangzhou Zhejiang 311121 (CN); YI, Li, Hangzhou Zhejiang 311121 (CN); YIN, Shuwei, Hangzhou Zhejiang 311121 (CN)
(74) Representative: Finnegan Europe LLP
(86) International application number: PCT/CN2017/074872
(87) International publication number: WO 2017/157156

(56) References cited:
- CN-A- 101 800 762
- CN-A- 102 882 973
- CN-A- 103 473 298
- CN-A- 104 731 595
- CN-A- 105 245 373
- US-B1- 7 751 409
- US-B1- 8 489 811
- US-B1- 8 489 811
- US-B2- 8 775 773

## Description

### Technical Field

The present application relates to the field of Internet technologies, and particularly to a user request processing method and device.

### Background Art

With the development of computer and network technologies and the widespread use of cloud computing and other network computing platforms, more and more key service systems run on network computing platforms. Service applications of a network computing platform are usually jointly maintained by a large number of personnel and users or share the same server. As the core of all service applications is user data, security issues regarding isolation and sharing of user private data are of great importance.

A Platform as a Service (PaaS) cloud platform is an operation support platform built based on cloud computing technologies. A third-party software developer can deploy application products rapidly on the PaaS cloud platform, and provide application services to users. A conventional PaaS cloud platform generally can implement the isolation of applications of different software developers by using virtual machines, and use the virtual machine as the smallest unit for scheduling. However, when the virtual machine is used as the smallest unit, there are many problems including long start time, occupation of a large number of system resources, large image storage file, and time-consuming migration and adjustment of running instances. On this basis, a novel PaaS cloud platform can implement the isolation of applications of different software developers by using a container technology, and use the container as the smallest unit for scheduling. The container technology is a virtualization technology that manages codes and applications by virtualizing an operating system, so that more computing workloads can be placed on one server. Each container includes an exclusive complete user environment space.

American patent US 7751409 describes a system using containers configured to encapsulate service applications.

American patent US8775773 describes a system for providing logical storage volumes created from logical containers.

American patent US8489811 relates to data containers in a clustered storage system.

Currently, the Docker technology is a main representative of the container technology. A plurality of Docker containers can be created in a server. Each Docker container is equivalent to a virtual machine. User private data is stored in different Docker containers, so as to implement the isolation of user private data in the Docker containers by means of the isolation of the Docker containers. However, each Docker container works independently, the Docker container is fully isolated, and one Docker container cannot call another Docker container. As a result, different Docker containers cannot share data and therefore cannot complete the same application together.

### Summary of the Invention

The present application provides a user request processing method, being implemented with container technology corresponding to virtualization technology that manages codes and applications by virtualizing an operating system, the method comprising:
determining a first container corresponding to a user request after the user request is received;
determining a logical container corresponding to the first container by using a preset relationship between the first container and the logical container;
acquiring a container cluster corresponding to the logical container by using a logical address corresponding to the logical container, wherein the container cluster includes at least two second containers; and
processing the user request by using the second containers.

Further as defined by the dependent claims the process of determining a first container corresponding to a user request specifically includes:
parsing out domain name information or IP address information from the user request, and determining in all the containers a first container matching the domain name information or the IP address information; and
after the determining a first container corresponding to a user request, the method further includes:
   processing the user request by using the first container.

The process of determining a logical container corresponding to the first container by using a preset relationship between the first container and the logical container specifically includes: preconfiguring in the first container a link relationship between the first container and the logical container; and determining the logical container corresponding to the first container by using the link relationship.

The process of acquiring a container cluster corresponding to the logical container by using a logical address corresponding to the logical container specifically includes: querying, according to a logical address preconfigured in the logical container, a preconfigured correspondence between logical addresses and container clusters to obtain a container cluster corresponding to the logical address, and determining the container cluster corresponding to the logical address as the container cluster corresponding to the logical container.

The method further includes: preconfiguring a correspondence between the logical address corresponding to the logical container and the container cluster corresponding to the logical container, and recording, in the container cluster, address information of the at least two second containers, wherein the second container is a container that can be called by the first container corresponding to the logical container; and creating, when the container cluster needs to be expanded, a second container that can be called by the first container, and recording, in the container cluster, address information of the currently created second container.

The process of processing the user request by using the second containers specifically includes:
allocating processing tasks of the user request to each second container in the container cluster according to a preset policy, and using each second container to process the processing task allocated to the second container,
wherein the preset policy specifically includes a load balancing policy.

The method further includes:
storing a correspondence between the logical address corresponding to the logical container and domain name information corresponding to the logical container into a domain name system DNS service, so that another container acquires the logical address corresponding to the logical container from the DNS service by using the domain name information corresponding to the logical container, and accesses the container cluster corresponding to the logical container by using the logical address corresponding to the logical container.

The first container and each second container in the container cluster each include a Docker container.

The present application provides a user request device implemented with container technology corresponding to virtualization technology that manages codes and applications by virtualizing an operating system, the device comprising:
a determining module configured to determine a first container corresponding to a user request after the user request is received; and determine a logical container corresponding to the first container by using a preset relationship between the first container and the logical container;
an acquiring module configured to acquire a container cluster corresponding to the logical container by using a logical address corresponding to the logical container, wherein the container cluster includes at least two second containers; and
a processing module configured to process the user request by using the second containers. In further implementations the determining module is specifically configured to, in the process of determining a first container corresponding to a user request, parse out domain name information or IP address information from the user request, and determine in all the containers a first container matching the domain name information or the IP address information; and
the processing module is further configured to process the user request by using the first container after the determining module determines the first container corresponding to the user request.

The determining module is specifically configured to, in the process of determining a logical container corresponding to the first container by using a preset relationship between the first container and the logical container, preconfigure in the first container a link relationship between the first container and the logical container; and determine the logical container corresponding to the first container by using the link relationship.

The acquiring module is specifically configured to, in the process of acquiring a container cluster corresponding to the logical container by using a logical address corresponding to the logical container, preconfigure a logical address in the logical container, query, according to the logical address preconfigured in the logical container, a preconfigured correspondence between logical addresses and container clusters to obtain a container cluster corresponding to the logical address, and determine the container cluster corresponding to the logical address as the container cluster corresponding to the logical container.

The user request processing device further includes:
a maintenance module configured to, before the acquiring module queries the preconfigured correspondence between logical addresses and container clusters, preconfigure a correspondence between the logical address corresponding to the logical container and the container cluster corresponding to the logical container, and record, in the container cluster, address information of the at least two second containers, wherein the second container is a container that can be called by the first container corresponding to the logical container,
wherein the maintenance module is further configured to create, when the container cluster needs to be expanded, a second container that can be called by the first container, and record, in the container cluster, address information of the currently created second container.

The processing module is specifically configured to, in the process of processing the user request by using the second containers, allocate processing tasks of the user request to each second container in the container cluster according to a preset policy, and use each second container to process the processing task allocated to the second container, wherein the preset policy specifically includes a load balancing policy.

The user request processing device further includes:
a storage module configured to store a correspondence between the logical address corresponding to the logical container and domain name information corresponding to the logical container into a domain name system DNS service, so that another container acquires the logical address corresponding to the logical container from the DNS service by using the domain name information corresponding to the logical container, and accesses the container cluster corresponding to the logical container by using the logical address corresponding to the logical container.

The first container and each second container in the container cluster each include a Docker container.

Based on the above technical solutions, in the embodiments of the present application, by configuring a preset relationship between a first container and a logical container, the logical container corresponding to the first container can be determined; a container cluster including at least two second containers that corresponds to the logical container can be acquired by using a logical address corresponding to the logical container; and a user request can be processed by using the first container and the at least two second containers. As such, one user request may be simultaneously processed by the first container and the at least two second containers, the containers do not independently work and are not fully isolated, and one first container can call at least two second containers in the container cluster so that different containers can share data with each other and can complete the same application together. In addition, scale-out of second containers in the container cluster can be implemented conveniently by adding new second containers to the container cluster, thus improving the user request processing capability.

### Brief Description of the Drawings

To describe the technical solutions in the embodiments of the present application or the prior art more clearly, the drawings that need to be used in the description of the embodiments or the prior art are briefly introduced. It would be obvious that the drawings in the following description are merely some embodiments of the present application, and those of ordinary skill in the art may further obtain other drawings according to these drawings without creative efforts.
Fig. 1 is a schematic diagram of an application scenario according to an implementation of the present application;
Fig. 2 is a flowchart of a user request processing method according to an implementation of the present application;
Fig. 3 is a schematic diagram of an application scenario after expansion according to an implementation of the present application;
Fig. 4 is a structural diagram of hardware of a server according to an implementation of the present application; and
Fig. 5 is a structural diagram of a user request processing device according to an implementation of the present application.

### Detailed Description

Terms used in the present application are merely for the purpose of describing specific embodiments and are not intended to limit the present application. Singular forms "a/an", "said" and "the" used in the present application and the claims are also intended to include plural forms, unless otherwise clearly specified by the context. It should also be understood that the term "and/or" as used herein means that any or all possible combinations of one or more associated items listed are included.

It should be understood that although terms such as first, second and third may be used in the present application to describe various information, the information should not be limited to such terms. Such terms are merely used for distinguishing information of the same type. For example, without departing from the scope of the present application, first information may also be referred to as second information, and similarly, second information may also be referred to as first information. In addition, depending on the context, the term "if' as used herein may be construed as "when," "while" or "in response to determining."

In view of the problems in the prior art, the embodiments of the present application provide a user request processing method, which can be applied to a device that uses the container technology to process a user request, for example, can be applied to a server. The container technology is a virtualization technology that manages codes and applications by virtualizing an operating system, so that more computing workloads can be placed on one server and the capacity be expanded for new computing tasks in an instant. Each container includes an exclusive complete user environment space, and changes in one container will not affect the runtime environment of other containers.

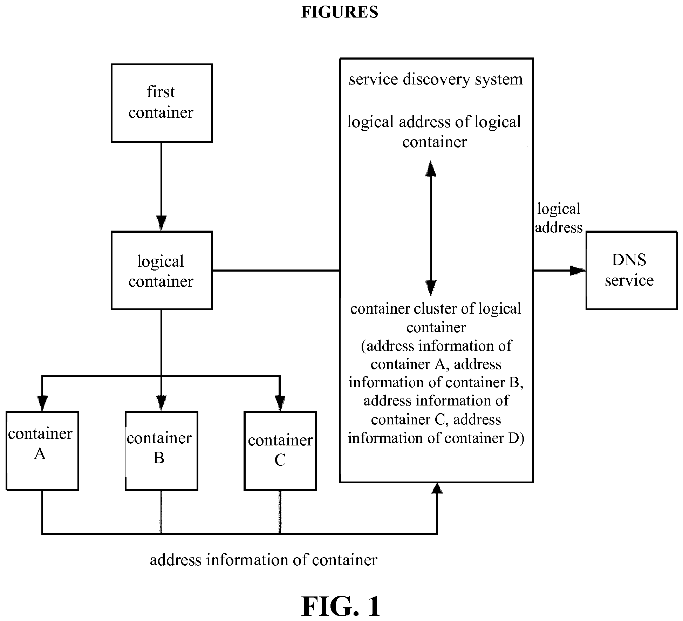

Fig. 1 is a schematic diagram of an application scenario according to an implementation of the present application. A plurality of containers is created in a server. Each container is equivalent to a virtual machine. User private data is stored in different containers, so as to implement the isolation of user private data in the containers by means of the isolation of the containers. On this basis, in the embodiments of the present application, to enable one container to call another container so that different containers can share data with each other and can complete the same application together, a container cluster including at least two containers that corresponds to a logical container can be acquired based on a preset relationship between containers and logical containers as well as a logical address corresponding to the logical container, so that a user request can be processed by using a plurality of containers.

For ease of distinguishing, in a process where one container calls another container, one container is referred to as a first container, and another container is referred to as a second container. In addition, in the embodiments of the present application, at least two second containers having the same function may be deployed, and the at least two second containers can complete processing of the same application together. In Fig. 1, the second containers may include a container A, a container B, and a container C.

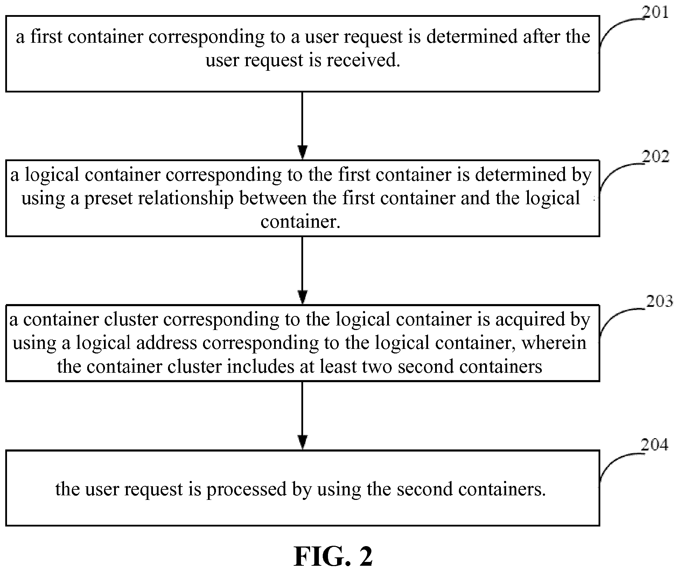

In the above application scenario, as shown in Fig. 2, the user request processing method includes the following steps:
Step 201, a first container corresponding to a user request is determined after the user request is received.

In this embodiment of the present application, the process of determining a first container corresponding to a user request may specifically include but is not limited to the following manner: parsing out domain name information or IP address information from the user request, and determining in all the containers a first container matching the domain name information or the IP address information.

For example, the first container may be a first container that provides blog, cloud service, API (Application Programming Interface), web and other applications, and the first container provides its domain name information or IP address information to a client terminal. Based on this, when accessing blog, cloud service, API, web and other applications, the client terminal sends a user request carrying the domain name information or the IP address information to a server. After receiving the user request, the server parses out the domain name information or the IP address information from the user request, and determines in all local containers a first container matching the domain name information or the IP address information matches, that is, the first container corresponding to the user request.

In this embodiment of the present application, after the first container corresponding to the user request is determined, the user request may further be processed by using the first container. For example, for a user request of the blog application, the first container may be used to process the user request, for example, analyze to-be-written data carried in the user request, analyze user identity information carried in the user request, analyze a link carried in the user request and acquire a content corresponding to the link, and so on. For other applications, the processing procedure of the user request is similar to the processing of the user request of the blog application, and details will not be repeatedly described herein. In a word, the first container can provide computing resources, memory resources, network resources, storage resources and the like for the user request, and the user request can be processed by using the resources provided by the first container. The detailed processing procedure will not be described herein.

Step 202, a logical container corresponding to the first container is determined by using a preset relationship between the first container and the logical container. The preset relationship may be selected arbitrarily based on actual experience, as long as the preset relationship exists between the first container and the logical container and the logical container corresponding to the first container can be found based on the preset relationship. The first container may correspond to only one logical container.

In this embodiment of the present application, in a preferred implementation, the process of determining a logical container corresponding to the first container by using a preset relationship between the first container and the logical container may specifically include but is not limited to the following manner: preconfiguring in the first container a link relationship between the first container and the logical container; and determining the logical container corresponding to the first container by using the link relationship.

In the container technology, the link relationship is a method for connecting two containers, and a connection may be established between two containers by using the link relationship. On this basis, in this embodiment of the present application, the link relationship in the container technology may be applied. To be specific, a link relationship between the first container and the logical container is preconfigured in the first container, and the logical container corresponding to the first container is determined by using the link relationship.

Step 203, a container cluster corresponding to the logical container is acquired by using a logical address corresponding to the logical container. The container cluster includes at least two second containers.

In this embodiment of the present application, the process of acquiring a container cluster corresponding to the logical container by using a logical address corresponding to the logical container may specifically include but is not limited to the following manner: querying, according to a logical address preconfigured in the logical container, a preconfigured correspondence between logical addresses and container clusters to obtain a container cluster corresponding to the logical address, and determining the container cluster corresponding to the logical address as the container cluster corresponding to the logical container. Further, a correspondence between the logical address corresponding to the logical container and the container cluster corresponding to the logical container is preconfigured, and address information of the at least two second containers is recorded in the container cluster, wherein the second container is a container that can be called by the first container corresponding to the logical container.

In this embodiment of the present application, to enable the first container to call the at least two second containers, the link relationship between the first container and the logical container is preconfigured in the first container instead of directly preconfiguring in the first container a link relationship between the first container and the second container, so that the logical container corresponding to the first container can be determined based on the link relationship. In addition, by preconfiguring the correspondence between the logical address corresponding to the logical container and the container cluster corresponding to the logical container and recording in the container cluster the address information of the at least two second containers, the container cluster corresponding to the logical address can be obtained by querying, according to the logical address preconfigured in the logical container, the preconfigured correspondence between logical addresses and container clusters; then the container cluster is determined as the container cluster corresponding to the logical container, and the at least two second containers in the container cluster can be matched with the first container. The second container is a container that can be called by the first container. As such, the first container can call the at least two second containers for processing.

As shown in Fig. 1, a service discovery system may be set in the server. The service discovery system is configured to maintain the correspondence between the logical address corresponding to the logical container and the container cluster corresponding to the logical container, and record in the container cluster the address information of the at least two second containers, for example, IP addresses and ports of the second containers. Definitely, in actual applications, the address information may also be other types of address information, as long as it can represent the second container. For example, the service discovery system maintains a correspondence between a logical address 1 corresponding to a logical container 1 and a container cluster 1 corresponding to the logical container 1, and records, in the container cluster 1, address information of the container A, address information of the container B, and address information of the container C. In addition, the service discovery system maintains a correspondence between a logical address 2 corresponding to a logical container 2 and a container cluster 2 corresponding to the logical container 2, and records, in the container cluster 2, address information of a container M and address information of a container N.

For ease of description, descriptions are given below by using an example where the service discovery system maintains the correspondence between the logical address 1 corresponding to the logical container 1 and the container cluster 1 corresponding to the logical container 1 and records, in the container cluster 1, the address information of the container A, the address information of the container B, and the address information of the container C.

When the logical container 1 is created, the logical address 1 corresponding to the logical container 1 is created in the logical container 1, and the logical address 1 corresponding to the logical container 1 is recorded in the service discovery system.

When the container A (second container) is created, the address information of the container A is created in the container A, and the address information of the container A is recorded in the service discovery system. In addition, the service discovery system can learn that the first container needs to call the container A for processing, and the first container corresponds to the logical container 1. Therefore, a correspondence between the logical address 1 and the address information of the container A is recorded in the service discovery system.

When the container B (second container) is created, the address information of the container B is created in the container B, and the address information of the container B is recorded in the service discovery system. In addition, the service discovery system can learn that the first container needs to call the container B for processing, and the first container corresponds to the logical container 1. Therefore, a correspondence between the logical address 1 and the address information of the container B is recorded in the service discovery system.

When the container C (second container) is created, the address information of the container C is created in the container C, and the address information of the container C is recorded in the service discovery system. In addition, the service discovery system can learn that the first container needs to call the container C for processing, and the first container corresponds to the logical container 1. Therefore, a correspondence between the logical address 1 and the address information of the container C is recorded in the service discovery system.

On the basis of the above process, the correspondence between the logical address 1 corresponding to the logical container 1 and the container cluster 1 corresponding to the logical container 1 is recorded in the service discovery system, and the address information of the container A, the address information of the container B, and the address information of the container C are recorded in the container cluster 1. Based on this, after the logical container 1 corresponding to the first container is determined, the corresponding container cluster 1 can be found in the service discovery system through query using the logical address 1 corresponding to the logical container 1, and the address information of the container A, the address information of the container B, and the address information of the container C are recorded in the container cluster 1.

Based on the above technical solution, by means of service discovery, the correspondence between the logical address corresponding to the logical container and the container cluster corresponding to the logical container is recorded in the service discovery system, and the address information of the at least two second containers is recorded in the container cluster, so that a container cluster that can include the address information of the at least two second containers can be obtained by parsing according to the logical address. As such, the first container can be associated with the at least two second containers (for example, the container A, the container B, the container C, etc.), thereby achieving a one-to-many association of containers. The first container can call the at least two second containers for processing.

In addition, based on the above technical solution, scale-out of second containers can further be implemented. Specifically, when the container cluster needs to be expanded, a second container that can be called by the first container is created, and address information (for example, IP address and port) of the currently created second container is recorded in the container cluster.

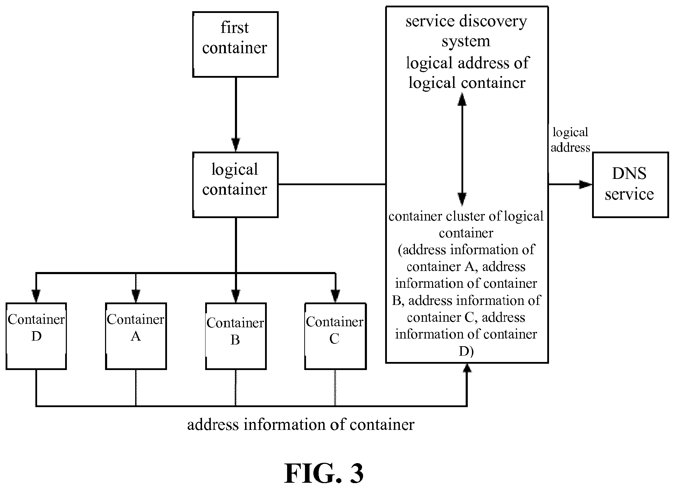

As shown in Fig. 3, assuming that the container cluster 1 needs to be expanded, for example, by adding a container D (second container) to the container cluster 1, the container D is added to the container cluster 1. In this case, a container D that can be called by the first container (the first container corresponding to the logical container 1) is created, address information of the container D is created in the container D, and the address information of the container D is recorded in the service discovery system. In addition, the service discovery system can learn that the first container needs to call the container D for processing, and the first container corresponds to the logical container 1. Therefore, a correspondence between the logical address 1 and the address information of the container D is recorded in the service discovery system. On this basis, for the first container, the logical container corresponding to the first container does not change, the logical address corresponding to the logical container does not change, and only the second containers in the container cluster 1 corresponding to the logical address are changed, i.e., the address information of the container D is added.

Before the container D is added to the container cluster 1, the first container corresponding to the user request is determined after the user request is received, the logical container 1 corresponding to the first container is determined by using a preset relationship between the first container and the logical container 1, the container cluster 1 corresponding to the logical container 1 is acquired by using the logical address 1 corresponding to the logical container 1, and the address information of the container A, the address information of the container B, the address information of the container C are recorded in the container cluster 1. As such, the first container can be associated with the container A, the container B, and the container C. After the container D is added to the container cluster 1, the first container corresponding to the user request is determined after the user request is received, the logical container 1 corresponding to the first container is determined by using the preset relationship between the first container and the logical container 1, the container cluster 1 corresponding to the logical container 1 is acquired by using the logical address 1 corresponding to the logical container 1, and the address information of the container A, the address information of the container B, the address information of the container C, and the address information of the container D are recorded in the container cluster 1. As such, the first container can be associated with the container A, the container B, the container C, and the container D.

Step 204, the user request is processed by using the second containers.

In this embodiment of the present application, the process of processing the user request by using the second containers may specifically include but is not limited to the following manner: allocating processing tasks of the user request to each second container in the container cluster according to a preset policy, and using each second container to process the processing task allocated to the second container. The preset policy may specifically include but is not limited to a load balancing policy.

For example, the address information of the container A, the address information of the container B, the address information of the container C, and the address information of the container D are recorded in the container cluster 1, and the container A, the container B, the container C and the container D are all used to provide a data storage application. On the basis of processing the user request by using the first container, a processing task of the user request (for example, storing data 1 to data 40 into a database) can be divided into a plurality of processing tasks, for example, a processing task 1 (for example, for storing the data 1 to the data 10 into the database), a processing task 2 (for example, for storing the data 11 to the data 20 into the database), a processing task 3 (for example, for storing the data 21 to the data 30 into the database) and a processing task 4 (for example, for storing the data 31 to the data 40 into the database). Further, according to the load balancing policy, the processing task 1 is allocated to the container A in the container cluster 1, the processing task 2 is allocated to the container B in the container cluster 1, the processing task 3 is allocated to the container C in the container cluster 1, and the processing task 4 is allocated to the container D in the container cluster 1. Further, the container A can be used to process the processing task 1 allocated to the container A, for example, store the data 1 to the data 10 into the database; the container B can be used to process the processing task 2 allocated to the container B, for example, store the data 11 to the data 20 into the database; the container C can be used to process the processing task 3 allocated to the container C, for example, store the data 21 to the data 30 into the database; the container D can be used to process the processing task 4 allocated to the container D, for example, store the data 31 to the data 40 into the database.

Definitely, the above process is merely an example of processing a user request by using a second container, and the processes of processing the user request by all the second containers that can be called by the first container shall all fall within the protection scope of the present application.

In this embodiment of the present application, as shown in Fig. 1 or Fig. 3, a correspondence between the logical address corresponding to the logical container and domain name information corresponding to the logical container may further be stored into a DNS (Domain Name System) service. For example, the correspondence between the logical address and the domain name information is stored into the DNS service by using the service discovery system. Based on this, other containers can acquire the logical address corresponding to the logical container from the DNS service by using the domain name information corresponding to the logical container, and access the container cluster corresponding to the logical container by using the logical address corresponding to the logical container. That is, other containers can call the at least two second containers in the container cluster by using the domain name information corresponding to the logical container.

For example, assuming that the at least two second containers in the container cluster are used to provide a web application, the correspondence between the logical address corresponding to the logical container and the domain name information corresponding to the logical container may be stored into the DNS service, so that the first container can acquire the logical address corresponding to the logical container from the DNS service by using domain name information corresponding to the web application (which may be provided to the first container), and then can call the at least two second containers in the container cluster by using the logical address corresponding to the logical container.

In addition, for other applications such as the above data storage application that are provided by the at least two second containers in the container cluster, as described above, when the correspondence between the logical address corresponding to the logical container and the domain name information corresponding to the logical container is not stored in the DNS service, the logical address corresponding to the logical container may be directly provided to the first container, so that the first container can call the at least two second containers in the container cluster by directly using the logical address corresponding to the logical container, instead of using the domain name information corresponding to the logical container.

In this embodiment of the present application, the first container and each second container in the container cluster each include a Docker container. As shown in Fig. 1 or Fig. 3, the first container is a Docker container, the container A is a Docker container, the container B is a Docker container, the container C is a Docker container, and the container D is a Docker container.

Based on the above technical solution, in this embodiment of the present application, by configuring a preset relationship between a first container and a logical container, the logical container corresponding to the first container can be determined; a container cluster including at least two second containers that corresponds to the logical container can be acquired by using a logical address corresponding to the logical container; and a user request can be processed by using the first container and the at least two second containers. As such, one user request may be simultaneously processed by the first container and the at least two second containers, the containers do not independently work and are not fully isolated, and one first container can access at least two second containers in the container cluster so that different containers can share data with each other and can complete the same application together. In addition, scale-out of second containers in the container cluster can be implemented conveniently by adding new second containers to the container cluster, thus improving the user request processing capability.

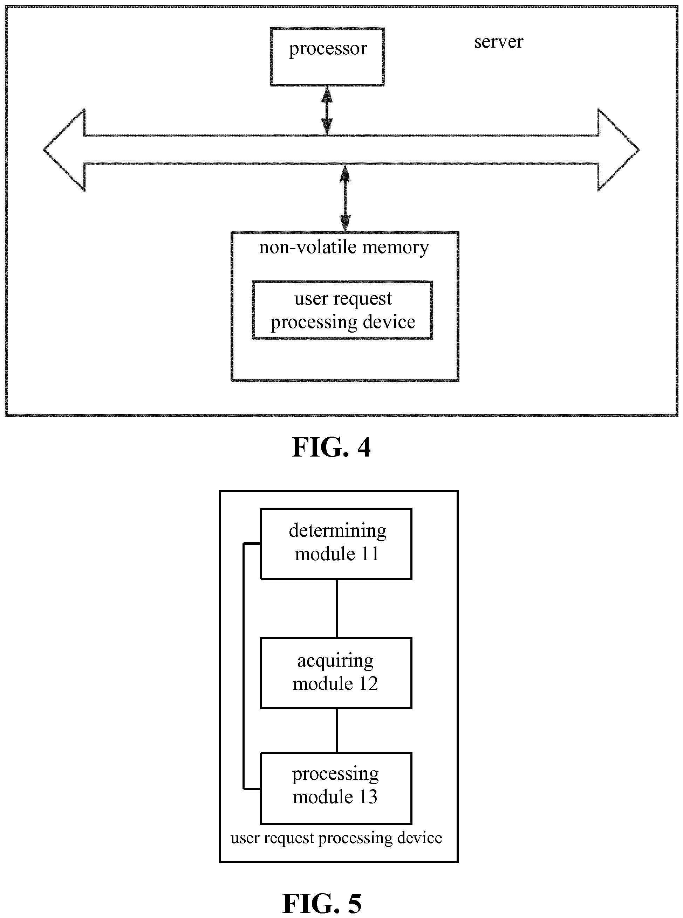

Based on the same application concept as the above method, an embodiment of the present application further provides a user request processing device. The user request processing device is applied to a server. The user request processing device can be implemented by software, hardware, or a combination of software and hardware. Taking the software implementation as an example, as a logical device, the user request processing device is formed by a processor of the server reading corresponding computer program instructions in a non-volatile memory. At the hardware level, as shown in Fig. 4, which is a structural diagram of hardware of a server including the user request processing device provided by the present application, the server may further include other hardware such as a forwarding chip responsible for packet processing, a network interface and a memory, in addition to the processor and the non-volatile memory shown in Fig. 4. In terms of the hardware structure, the server may also be a distributed device, and may include a plurality of interface cards for extension of packet processing at the hardware level.

Fig. 5 is a structural diagram of a user request processing device. The device specifically includes:
a determining module 11 configured to determine a first container corresponding to a user request after the user request is received; and determine a logical container corresponding to the first container by using a preset relationship between the first container and the logical container;
an acquiring module 12 configured to acquire a container cluster corresponding to the logical container by using a logical address corresponding to the logical container, wherein the container cluster includes at least two second containers; and
a processing module 13 configured to process the user request by using the second containers.

The determining module 11 is specifically configured to, in the process of determining a first container corresponding to a user request, parse out domain name information or IP address information from the user request, and determine in all the containers a first container matching the domain name information or the IP address information.

The processing module 13 is further configured to process the user request by using the first container after the determining module determines the first container corresponding to the user request.

The determining module 11 is specifically configured to, in the process of determining a logical container corresponding to the first container by using a preset relationship between the first container and the logical container, preconfigure in the first container a link relationship between the first container and the logical container; and determine the logical container corresponding to the first container by using the link relationship.

The acquiring module 12 is specifically configured to, in the process of acquiring a container cluster corresponding to the logical container by using a logical address corresponding to the logical container, preconfigure a logical address in the logical container, query, according to the logical address preconfigured in the logical container, a preconfigured correspondence between logical addresses and container clusters to obtain a container cluster corresponding to the logical address, and determine the container cluster corresponding to the logical address as the container cluster corresponding to the logical container.

The user request processing device further includes (not shown in the figure):
a maintenance module configured to, before the acquiring module queries the preconfigured correspondence between logical addresses and container clusters, preconfigure a correspondence between the logical address corresponding to the logical container and the container cluster corresponding to the logical container, and record, in the container cluster, address information of the at least two second containers, wherein the second container is a container that can be called by the first container corresponding to the logical container.

In an embodiment of the present application, the maintenance module is further configured to create, when the container cluster needs to be expanded, a second container that can be called by the first container, and record, in the container cluster, address information of the currently created second container.

The processing module 13 is specifically configured to, in the process of processing the user request by using the second containers, allocate processing tasks of the user request to each second container in the container cluster according to a preset policy, and use each second container to process the processing task allocated to the second container, wherein the preset policy specifically includes a load balancing policy.

The user request processing device further includes (not shown in the figure):
a storage module configured to store a correspondence between the logical address corresponding to the logical container and domain name information corresponding to the logical container into a domain name system DNS service, so that another container acquires the logical address corresponding to the logical container from the DNS service by using the domain name information corresponding to the logical container, and accesses the container cluster corresponding to the logical container by using the logical address corresponding to the logical container.

The first container and each second container in the container cluster each include a Docker container.

Based on the above technical solution, in this embodiment of the present application, by configuring a preset relationship between a first container and a logical container, the logical container corresponding to the first container can be determined; a container cluster including at least two second containers that corresponds to the logical container can be acquired by using a logical address corresponding to the logical container; and a user request can be processed by using the first container and the at least two second containers. As such, one user request may be simultaneously processed by the first container and the at least two second containers, the containers do not independently work and are not fully isolated, and one first container can access at least two second containers in the container cluster so that different containers can share data with each other and can complete the same application together. In addition, scale-out of second containers in the container cluster can be implemented conveniently by adding new second containers to the container cluster, thus improving the user request processing capability.

The modules in the device of the present application may be integrated together or separately deployed. The above modules may be combined into one module or may be further divided into a plurality of submodules.

According to the descriptions of the foregoing embodiments, those skilled in the art may be clear that the present application can be implemented by means of software and a necessary general hardware platform. Definitely, the present application can also be implemented by hardware. However, in most cases, the former is preferred. Based on such an understanding, the technical solutions in the present application essentially, or the part contributing to the prior art may be implemented in the form of a software product. The computer software product may be stored in a storage medium, and includes several instructions for instructing a computer device (which may be a personal computer, a server, a network device, or the like) to perform the method described in the embodiments of the present application. It should be understood by those skilled in the art that the accompanying drawings are merely schematic diagrams of preferred embodiments, and the modules or procedures in the accompanying drawings may not be necessary for implementing the present application.

It should be understood by those skilled in the art that modules in a device of an embodiment may be distributed in the device of the embodiment according to the description of the embodiment, or may be changed correspondingly to be located in one or more devices different from that of the embodiment. The modules of the above embodiment may be combined into one module or may be further divided into a plurality of submodules. The serial numbers of the embodiments of the present application are merely for purpose of description, and do not imply any preference among the embodiments.

Although several specific embodiments of the present application are disclosed above, the present application is not limited thereto. Any variation that can be conceived of by those skilled in the art shall fall within the protection scope of the present application, defined by the appended claims.

## Claims

1. A user request processing method, the method being implemented with container technology corresponding to virtualization technology that manages codes and applications by virtualizing an operating system, the method comprising:
determining a first container corresponding to a user request (201) after the user request is received;
determining a logical container corresponding to the first container (202) by using a preset relationship between the first container and the logical container;
acquiring a container cluster corresponding to the logical container (203) by using a logical address corresponding to the logical container, wherein the container cluster comprises at least two second containers; and
processing the user request (204) by using the second containers.

2. The method according to claim 1, wherein
the process of determining a first container corresponding to a user request specifically comprises:
parsing out domain name information or IP address information from the user request, and determining in all the containers a first container matching the domain name information or the IP address information; and
after the determining a first container corresponding to a user request, the method further comprises:
processing the user request by using the first container.

3. The method according to claim 1, wherein the process of determining a logical container corresponding to the first container by using a preset relationship between the first container and the logical container specifically comprises:
preconfiguring in the first container a link relationship between the first container and the logical container; and
determining the logical container corresponding to the first container by using the link relationship.

4. The method according to claim 1, wherein the process of acquiring a container cluster corresponding to the logical container by using a logical address corresponding to the logical container specifically comprises:
querying, according to a logical address preconfigured in the logical container, a preconfigured correspondence between logical addresses and container clusters to obtain a container cluster corresponding to the logical address, and determining the container cluster corresponding to the logical address as the container cluster corresponding to the logical container.

5. The method according to claim 4, wherein the method further comprises:
preconfiguring a correspondence between the logical address corresponding to the logical container and the container cluster corresponding to the logical container, and recording, in the container cluster, address information of the at least two second containers, wherein the second container is a container that can be called by the first container corresponding to the logical container; and
creating, when the container cluster needs to be expanded, a second container that can be called by the first container, and recording, in the container cluster, address information of the currently created second container.

6. The method according to claim 1, wherein
the process of processing the user request by using the second containers specifically comprises:
allocating processing tasks of the user request to each second container in the container cluster according to a preset policy, and using each second container to process the processing task allocated to the second container,
wherein the preset policy specifically comprises a load balancing policy.

7. The method according to claim 1, 4 or 5, wherein the method further comprises:
storing a correspondence between the logical address corresponding to the logical container and domain name information corresponding to the logical container into a domain name system DNS service, so that another container acquires the logical address corresponding to the logical container from the DNS service by using the domain name information corresponding to the logical container, and accesses the container cluster corresponding to the logical container by using the logical address corresponding to the logical container.

8. A user request processing device implemented with container technology corresponding to virtualization technology that manages codes and applications by virtualizing an operating system, the device comprising:
a determining module (11) configured to determine a first container corresponding to a user request after the user request is received; and determine a logical container corresponding to the first container by using a preset relationship between the first container and the logical container;
an acquiring module (12) configured to acquire a container cluster corresponding to the logical container by using a logical address corresponding to the logical container, wherein the container cluster comprises at least two second containers; and
a processing module (13) configured to process the user request by using the second containers.

9. The device according to claim 8, wherein the user request processing device is further configured to perform the method of any one of claims 2-4 and 6.

10. The device according to claim 9, further comprising:
a maintenance module configured to, before the acquiring module queries the preconfigured correspondence between logical addresses and container clusters, preconfigure a correspondence between the logical address corresponding to the logical container and the container cluster corresponding to the logical container, and record, in the container cluster, address information of the at least two second containers, wherein the second container is a container that can be called by the first container corresponding to the logical container,
wherein the maintenance module is further configured to create, when the container cluster needs to be expanded, a second container that can be called by the first container, and record, in the container cluster, address information of the currently created second container.

11. The device according to any one of claims 8 or 9, further comprising:
a storage module configured to store a correspondence between the logical address corresponding to the logical container and domain name information corresponding to the logical container into a domain name system DNS service, so that another container acquires the logical address corresponding to the logical container from the DNS service by using the domain name information corresponding to the logical container, and accesses the container cluster corresponding to the logical container by using the logical address corresponding to the logical container.

12. A computer readable medium that stores a set of instructions that is executable by at least one processor of a user request processing device to cause the device to perform a method for user request processing according to any one of clams 1-7.

13. A computer program product comprising instructions which, when the program is executed by a user request device, cause the user request device to carry out the method of any one of claims 1-7.

## Patentansprüche

1. Benutzeranforderungsverarbeitungsverfahren, wobei das Verfahren mit Containertechnologie implementiert wird, die Virtualisierungstechnologie entspricht, die Codes und Anwendungen verwaltet, indem ein Betriebssystem virtualisiert wird, wobei das Verfahren Folgendes umfasst:
Bestimmen eines ersten Containers, der einer Benutzeranforderung (201) entspricht, nachdem die Benutzeranforderung empfangen wurde;
Bestimmen eines logischen Containers, der dem ersten Container (202) entspricht, indem eine vorbestimmte Beziehung zwischen dem ersten Container und dem logischen Container verwendet wird;
Erwerben eines Containerclusters, der dem logischen Container (203) entspricht, indem eine logische Adresse verwendet wird, die dem logischen Container entspricht, wobei der Containercluster zumindest zwei zweite Container umfasst; und
Verarbeiten der Benutzeranforderung (204), indem die zweiten Container verwendet werden.

2. Verfahren nach Anspruch 1, wobei
der Prozess des Bestimmens eines ersten Containers, der einer Benutzeranforderung entspricht, spezifisch Folgendes umfasst:
Parsen von Domänennameninformationen oder IP-Adressinformationen aus der Benutzeranforderung, und Bestimmen, in allen Containern, eines ersten Containers, der mit den Domänennameninformationen oder den IP-Adressinformationen übereinstimmt; und
nach dem Bestimmen eines ersten Containers, der einer Benutzeranforderung entspricht, das Verfahren ferner Folgendes umfasst:
Verarbeiten der Benutzeranforderung, indem der erste Container verwendet wird.

3. Verfahren nach Anspruch 1, wobei der Prozess des Bestimmens eines logischen Containers, der dem ersten Container entspricht, indem eine vorbestimmte Beziehung zwischen dem ersten Container und dem logischen Container verwendet wird, spezifisch Folgendes umfasst:
Vorkonfigurieren einer Verbindungsbeziehung zwischen dem ersten Container und dem logischen Container in dem ersten Container; und
Bestimmen des logischen Containers, der dem ersten Container entspricht, indem die Verbindungsbeziehung verwendet wird.

4. Verfahren nach Anspruch 1, wobei der Prozess des Erwerbens eines Containerclusters, der dem logischen Container entspricht, indem eine logische Adresse verwendet wird, die dem logischen Container entspricht, spezifisch Folgendes umfasst:
Abfragen, gemäß einer logischen Adresse, die in dem logischen Container vorkonfiguriert ist, einer vorkonfigurierten Entsprechung zwischen logischen Adressen und Containerclustern, um einen Containercluster zu erhalten, welcher der logischen Adresse entspricht, und Bestimmen des Containerclusters, welcher der logischen Adresse entspricht, als der Containercluster, der dem logischen Container entspricht.

5. Verfahren nach Anspruch 4, wobei das Verfahren ferner Folgendes umfasst:
Vorkonfigurieren einer Entsprechung zwischen der logischen Adresse, die dem logischen Container entspricht, und dem Containercluster, der dem logischen Container entspricht, und Aufzeichnen, in dem Containercluster, von Adressinformationen der zumindest zwei zweiten Container, wobei der zweite Container ein Container ist, der durch den ersten Container, der dem logischen Container entspricht, aufgerufen werden kann; und
Erstellen, wenn der Containercluster erweitert werden muss, eines zweiten Containers, der durch den ersten Container aufgerufen werden kann, und Aufzeichnen, in dem Containercluster, von Adressinformationen des aktuell erstellten zweiten Containers.

6. Verfahren nach Anspruch 1, wobei
der Prozess des Verarbeitens der Benutzeranforderung, indem der zweite Container verwendet wird, spezifisch Folgendes umfasst:
Zuweisen von Verarbeitungsaufgaben der Benutzeranforderung zu jedem zweiten Container in dem Containercluster gemäß einer vorbestimmten Richtlinie, und Verwenden jedes zweiten Containers, um die Verarbeitungsaufgabe zu verarbeiten, die dem zweiten Container zugewiesen ist,
wobei die vorbestimmte Richtlinie spezifisch eine Lastausgleichsrichtlinie umfasst.

7. Verfahren nach Anspruch 1, 4 oder 5, wobei das Verfahren ferner Folgendes umfasst:
Speichern einer Entsprechung zwischen der logischen Adresse, die dem logischen Container entspricht, und von Domänennameninformationen, die dem logischen Container entsprechen, in einem Domänennamensystem-(DNS-)Dienst, sodass ein weiterer Container die logische Adresse, die dem logischen Container entspricht, von dem DNS-Dienst erwirbt, indem die Domänennameninformationen verwendet werden, die dem logischen Container entsprechen, und auf den Containercluster zugreift, der dem logischen Container entspricht, indem die logische Adresse verwendet wird, die dem logischen Container entspricht.

8. Benutzeranforderungsverarbeitungsvorrichtung, die mit Containertechnologie implementiert wird, die Virtualisierungstechnologie entspricht, die Codes und Anwendungen verwaltet, indem ein Betriebssystem virtualisiert wird, wobei die Vorrichtung Folgendes umfasst:
ein Bestimmungsmodul (11), das konfiguriert ist, um einen ersten Container zu bestimmen, der einer Benutzeranforderung entspricht, nachdem die Benutzeranforderung empfangen wurde; und einen logischen Container zu bestimmen, der dem ersten Container entspricht, indem eine vorbestimmte Beziehung zwischen dem ersten Container und dem logischen Container verwendet wird;
ein Erwerbsmodul (12), das konfiguriert ist, um einen Containercluster zu erwerben, der dem logischen Container entspricht, indem eine logische Adresse verwendet wird, die dem logischen Container entspricht, wobei der Containercluster zumindest zwei zweite Container umfasst; und
ein Verarbeitungsmodul (13), das konfiguriert ist, um die Benutzeranforderung zu verarbeiten, indem die zweiten Container verwendet werden.

9. Vorrichtung nach Anspruch 8, wobei die Benutzeranforderungsverarbeitungsvorrichtung ferner konfiguriert ist, um das Verfahren nach einem der Ansprüche 2-4 und 6 durchzuführen.

10. Vorrichtung nach Anspruch 9, ferner umfassend:
ein Wartungsmodul, das konfiguriert ist, um, bevor das Erwerbsmodul die vorkonfigurierte Entsprechung zwischen logischen Adressen und Containerclustern abfragt, eine Entsprechung zwischen der logischen Adresse, die dem logischen Container entspricht, und dem Containercluster, der dem logischen Container entspricht, vorzukonfigurieren, und in dem Containercluster Adressinformationen der zumindest zwei zweiten Container aufzuzeichnen, wobei der zweite Container ein Container ist, der durch den ersten Container aufgerufen werden kann, der dem logischen Container entspricht,
wobei das Wartungsmodul ferner konfiguriert ist, um, wenn der Containercluster erweitert werden muss, einen zweiten Container zu erstellen, der durch den ersten Container aufgerufen werden kann, und in dem Containercluster Adressinformationen des aktuell erstellten zweiten Containers aufzuzeichnen.

11. Vorrichtung nach einem der Ansprüche 8 oder 9, ferner umfassend:
ein Speichermodul, das konfiguriert ist, um eine Entsprechung zwischen der logischen Adresse, die dem logischen Container entspricht, und von Domänennameninformationen, die dem logischen Container entsprechen, in einem Domänennamensystem-(DNS-)Dienst zu speichern, sodass ein weiterer Container die logische Adresse, die dem logischen Container entspricht, von dem DNS-Dienst erwirbt, indem die Domänennameninformationen verwendet werden, die dem logischen Container entsprechen, und auf den Containercluster zugreift, der dem logischen Container entspricht, indem die logische Adresse verwendet wird, die dem logischen Container entspricht.

12. Computerlesbares Medium, das einen Satz von Anweisungen speichert, der durch zumindest einen Prozessor einer Benutzeranforderungsverarbeitungsvorrichtung ausführbar ist, um die Vorrichtung dazu zu veranlassen, ein Verfahren zur Benutzeranforderungsverarbeitung nach einem der Ansprüche 1-7 durchzuführen.

13. Computerprogrammprodukt, das Anweisungen umfasst, die, wenn das Programm durch eine Benutzeranforderungsvorrichtung ausgeführt wird, die Benutzeranforderungsvorrichtung dazu veranlassen, das Verfahren nach einem der Ansprüche 1-7 durchzuführen.

## Revendications

1. Procédé de traitement de demande d'utilisateur, le procédé étant mis en oeuvre avec la technologie des conteneurs correspondant à une technologie de virtualisation qui gère des codes et des applications en virtualisant un système d'exploitation, le procédé comprenant :
la détermination d'un premier conteneur correspondant à une demande d'utilisateur (201) après la réception de la demande d'utilisateur ;
la détermination d'un conteneur logique correspondant au premier conteneur (202) à l'aide d'une relation prédéfinie entre le premier conteneur et le conteneur logique ;
l'acquisition d'une grappe de conteneurs correspondant au conteneur logique (203) à l'aide d'une adresse logique correspondant au conteneur logique, ladite grappe de conteneurs comprenant au moins deux seconds conteneurs ; et
le traitement de la demande d'utilisateur (204) à l'aide des seconds conteneurs.

2. Procédé selon la revendication 1, ledit processus de détermination d'un premier conteneur correspondant à une demande d'utilisateur comprenant spécifiquement :
l'analyse des informations de nom de domaine ou des informations d'adresse IP à partir de la demande d'utilisateur, et la détermination dans tous les conteneurs d'un premier conteneur correspondant aux informations de nom de domaine ou aux informations d'adresse IP ; et
après la détermination d'un premier conteneur correspondant à une demande d'utilisateur, ledit procédé comprenant en outre :
le traitement de la demande d'utilisateur à l'aide du premier conteneur.

3. Procédé selon la revendication 1, ledit processus de détermination d'un conteneur logique correspondant au premier conteneur à l'aide d'une relation prédéfinie entre le premier conteneur et le conteneur logique comprenant spécifiquement :
la configuration au préalable dans le premier conteneur d'une relation de lien entre le premier conteneur et le conteneur logique ; et
la détermination du conteneur logique correspondant au premier conteneur à l'aide de la relation de lien.

4. Procédé selon la revendication 1, ledit processus d'acquisition d'une grappe de conteneurs correspondant au conteneur logique à l'aide d'une adresse logique correspondant au conteneur logique comprenant spécifiquement :
l'interrogation, selon une adresse logique configurée au préalable dans le conteneur logique, une correspondance configurée au préalable entre des adresses logiques et des grappes de conteneurs pour obtenir une grappe de conteneurs correspondant à l'adresse logique, et la détermination de la grappe de conteneurs correspondant à l'adresse logique en tant que grappe de conteneurs correspondant au conteneur logique.

5. Procédé selon la revendication 4, ledit procédé comprenant en outre :
la configuration au préalable d'une correspondance entre l'adresse logique correspondant au conteneur logique et la grappe de conteneurs correspondant au conteneur logique, et l'enregistrement, dans la grappe de conteneurs, des informations d'adresse des au moins deux seconds conteneurs, ledit second conteneur étant un conteneur qui peut être appelé par le premier conteneur correspondant au conteneur logique ; et
la création, lorsque la grappe de conteneurs doit être développée, d'un second conteneur qui peut être appelé par le premier conteneur, et l'enregistrement, dans la grappe de conteneurs, des informations d'adresse du second conteneur actuellement créé.

6. Procédé selon la revendication 1, ledit processus de traitement de la demande de l'utilisateur à l'aide des seconds conteneurs comprenant spécifiquement :
l'attribution des tâches de traitement de la demande utilisateur à chaque second conteneur dans la grappe de conteneurs selon une politique prédéfinie, et l'utilisation de chaque second conteneur pour traiter la tâche de traitement attribuée au second conteneur, ladite politique prédéfinie comprenant spécifiquement une politique d'équilibrage de charge.

7. Procédé selon la revendication 1, 4 ou 5, ledit procédé comprenant en outre :
le stockage d'une correspondance entre l'adresse logique correspondant au conteneur logique et les informations de nom de domaine correspondant au conteneur logique dans un service de système de nom de domaine (DNS), afin qu'un autre conteneur acquière l'adresse logique correspondant au conteneur logique à partir du service DNS à l'aide des informations de nom de domaine correspondant au conteneur logique et accède à la grappe de conteneurs correspondant au conteneur logique à l'aide de l'adresse logique correspondant au conteneur logique.

8. Dispositif de traitement de demande d'utilisateur mis en oeuvre avec la technologie des conteneurs correspondant à une technologie de virtualisation qui gère des codes et des applications en virtualisant un système d'exploitation, le dispositif comprenant :
un module de détermination (11) configuré pour déterminer un premier conteneur correspondant à une demande d'utilisateur après la réception de la demande d'utilisateur ; et déterminer un conteneur logique correspondant au premier conteneur à l'aide d'une relation prédéfinie entre le premier conteneur et le conteneur logique ;
un module d'acquisition (12) configuré pour acquérir une grappe de conteneurs correspondant au conteneur logique à l'aide d'une adresse logique correspondant au conteneur logique, ladite grappe de conteneurs comprenant au moins deux seconds conteneurs ; et
un module de traitement (13) configuré pour traiter la demande de l'utilisateur à l'aide des seconds conteneurs.

9. Dispositif selon la revendication 8, ledit dispositif de traitement de demande d'utilisateur étant en outre configuré pour réaliser le procédé selon l'une quelconque des revendications 2 à 4 et 6.

10. Dispositif selon la revendication 9, comprenant en outre :
un module de maintenance configuré pour, avant que le module d'acquisition n'interroge la correspondance configurée au préalable entre les adresses logiques et les grappes de conteneurs, configurer au préalable une correspondance entre l'adresse logique correspondant au conteneur logique et la grappe de conteneurs correspondant au conteneur logique, et enregistrer, dans la grappe de conteneurs, des informations d'adresse des au moins deux seconds conteneurs, ledit second conteneur étant un conteneur qui peut être appelé par le premier conteneur correspondant au conteneur logique, ledit module de maintenance étant en outre configuré pour créer, lorsque la grappe de conteneurs doit être développée, un second conteneur qui peut être appelé par le premier conteneur, et enregistrer, dans la grappe de conteneurs, des informations d'adresse du second conteneur actuellement créé.

11. Dispositif selon l'une quelconque des revendications 8 ou 9, comprenant en outre :
un module de stockage configuré pour stocker une correspondance entre l'adresse logique correspondant au conteneur logique et les informations de nom de domaine correspondant au conteneur logique dans un service de système de nom de domaine (DNS), afin qu'un autre conteneur acquière l'adresse logique correspondant au conteneur logique à partir du service DNS à l'aide des informations de nom de domaine correspondant au conteneur logique et accède à la grappe de conteneurs correspondant au conteneur logique à l'aide de l'adresse logique correspondant au conteneur logique.

12. Support lisible par ordinateur stockant un ensemble d'instructions qui sont exécutables par au moins un processeur d'un dispositif de traitement de demande d'utilisateur pour amener le dispositif à réaliser un procédé de traitement de demande d'utilisateur selon l'une quelconque des revendications 1 à 7.

13. Produit programme informatique comprenant des instructions qui, lorsque le programme est exécuté par un dispositif de demande d'utilisateur, amènent le dispositif de demande d'utilisateur à effectuer le procédé selon l'une quelconque des revendications 1 à 7.
